# EUROPEAN PATENT APPLICATION

(11) **EP 4 711 921 A1**
(43) Date of publication of application: **18.03.2026**
(21) Application number: 24802784.9
(22) Date of filing: 25.04.2024
(51) Int. Cl.: G06F 9/451

(54) **INTERFACE DISPLAY METHOD AND APPARATUS, AND DEVICE AND STORAGE MEDIUM**

(30) Priority: 08.05.2023 CN 202310513033
(71) Applicant: Beijing Zitiao Network Technology Co., Ltd., Beijing 100190 (CN)
(72) Inventor: SONG, Xin, Beijing 100028 (CN); WANG, Daoyu, Beijing 100028 (CN); ZOU, Rong, Beijing 100028 (CN)
(74) Representative: Isarpatent
(86) International application number: PCT/CN2024/089741
(87) International publication number: WO 2024/230499

(57) **Abstract**

The embodiments of the present disclosure relate to the technical field of computers. Disclosed are an interface display method and apparatus, and a device and a storage medium. The method comprises: displaying in a target interface first association information of a preset creation element; and displaying in a first preset area of the target interface second association information of at least one candidate creation element respectively corresponding to at least one candidate element type or the second association information and third association information of the candidate creation element, wherein the candidate creation element and the preset creation element meet a preset media content association relationship, the second association information comprises description information of the candidate creation element, and/or the third association information comprises a media content set associated with the preset creation element and the candidate creation element.

## Description

The present application claims priority to Chinese Patent Application No. 202310513033.5, filed on May 8, 2023, which is incorporated herein by reference in its entirety as a part of the present application.

### TECHNICAL FIELD

Embodiments of the present disclosure relate to an interface display method and an apparatus, a device, and a storage medium.

### BACKGROUND

With the continuous development of Internet technologies, users may browse various multimedia content through the Internet, and different users may share media content with each other by posting media content such as videos or pictures.

### SUMMARY

Embodiments of the present disclosure provide an interface display method and apparatus, a storage medium, and a device, which can optimize existing solutions of interface display that is based on creation elements.

According to a first aspect, an embodiment of the present disclosure provides an interface display method. The method includes:
displaying first associated information of a preset creation element in a target interface; and
displaying second associated information of at least one candidate creation element respectively corresponding to at least one candidate element type in a first preset region of the target interface, or displaying the second associated information and third associated information of the at least one candidate creation element in the first preset region of the target interface, where the candidate creation element and the preset creation element meet a preset media content association relationship, and the second associated information comprises description information of the candidate creation element, and/or the third associated information comprises a collection of media content associated with the preset creation element and the candidate creation element.

According to a second aspect, an embodiment of the present disclosure further provides an interface display apparatus. The apparatus includes:
a first associated information display module, which is configured to display first associated information of a predetermined creation element in a target interface; and
a second associated information display module, which is configured to display second associated information of at least one candidate creation element respectively corresponding to at least one candidate element type in a first preset region of the target interface, or display the second associated information and third associated information of the at least one candidate creation element in the first preset region of the target interface, where the candidate creation element and the predetermined creation element meet a predetermined media content association relationship, and the second associated information includes description information of the candidate creation element, and/or the third associated information includes a collection of media content associated with the predetermined creation element and the candidate creation element.

According to a third aspect, an embodiment of the present disclosure further provides an electronic device. The electronic device includes:
one or more processors; and
a storage apparatus, which is configured to store one or more programs,
the one or more programs, when executed by the one or more processors, cause the one or more processors to implement the interface display method provided in the embodiments of the present disclosure.

According to a fourth aspect, an embodiment of the present disclosure further provides a storage medium including computer-executable instructions, the computer-executable instructions, when executed by a computer processor, are used to perform the interface display method provided in the embodiments of the present disclosure.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
Fig. 1 is a schematic flowchart of an interface display method according to an embodiment of the present disclosure;
Fig. 2 is a schematic diagram of an interface according to an embodiment of the present disclosure;
Fig. 3 is a schematic diagram of another interface according to an embodiment of the present disclosure;
Fig. 4 is a schematic flowchart of another interface display method according to an embodiment of the present disclosure;
Fig. 5a is a schematic diagram of interface interaction according to an embodiment of the present disclosure;
Fig. 5b is a schematic diagram of another interface interaction according to an embodiment of the present disclosure;
Fig. 6 is a schematic diagram of a structure of an interface display apparatus according to an embodiment of the present disclosure; and
Fig. 7 is a schematic diagram of a structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

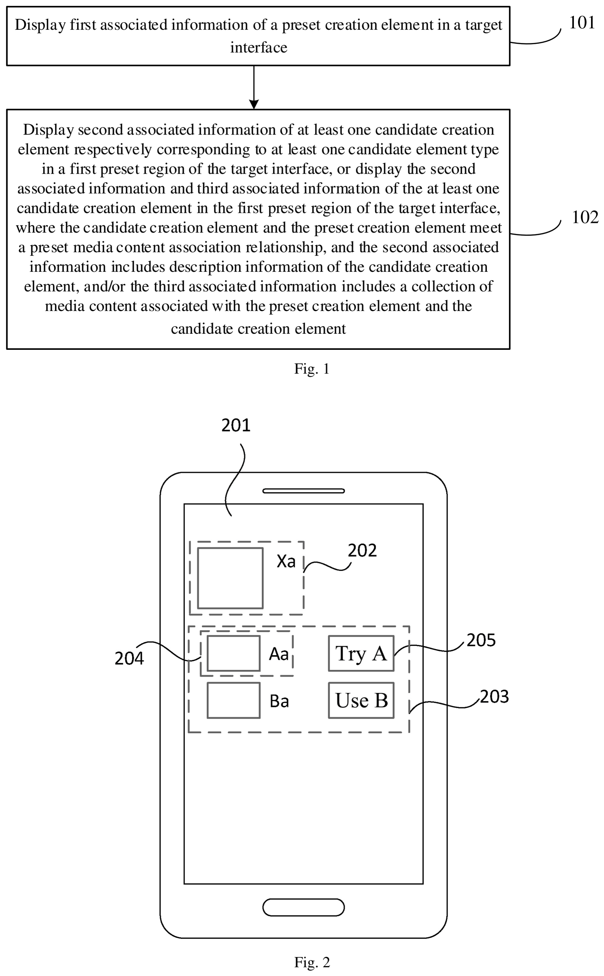

Fig. 1 is a schematic flowchart of an interface display method according to an embodiment of the present disclosure. This embodiment of the present disclosure is applicable to the case of interface display. The method may be performed by an interface display apparatus. The apparatus may be implemented in the form of software and/or hardware, and optionally, by an electronic device. The electronic device may be a mobile terminal such as a cell phone, a smart watch, a tablet computer, or a personal digital assistant, or may be a device such as a personal computer (PC) or a server.

As shown in Fig. 1, the method includes the following steps.

Step 101: Display first associated information of a preset creation element in a target interface.

For example, the target interface may be an interface in a preset application, the preset application has a media content posting function, and the specific type of the application is not limited. The media content in the embodiments of the present disclosure may be specifically understood as a media work, for example, may include a video work or a graphic work. The creation element may be understood as a basic component used to create media content. For example, the type of the creation element may include music, an effect, a template, and a creation theme. The effect may also be referred to as a prop, and effect processing may be performed on a basic material (for example, a picture or a video), or an effect element, such as a stylized effect or interactive games, may be added to the basic material. The template may include functions for processing content of the basic material, such as beautification, splicing, or editing. The creation theme may include related information or objects used to reflect the subject and core idea of the media content, and may include platform activities or platform playing ways in the preset application, such as topics or challenges. The preset creation element may be a creation element of any of the above preset types, such as music. The target interface may specifically be a details interface of the preset creation element, such as a music details page.

For example, associated information of the creation element may include description information of the creation element, such as an element name, an element source, an element associated image, or related statistical information (such as the number of people using the creation element); and may further include associated controls for the creation element, such as a favorite control or a forward control. The first associated information is associated information of the preset creation element. Taking music as an example, the first associated information of music may include a music name, a music cover, a musician, a music album, the number of users, a favorite control, a full-length music listening control, etc. A display location of the first associated information in the target interface is not limited, for example, the first associated information may be displayed in a top region of the target interface.

Step 102: Display second associated information of at least one candidate creation element respectively corresponding to at least one candidate element type in a first preset region of the target interface, or display the second associated information and third associated information of the at least one candidate creation element in the first preset region of the target interface, where the candidate creation element and the preset creation element meet a preset media content association relationship, and the second associated information includes description information of the candidate creation element, and/or the third associated information includes a collection of media content associated with the preset creation element and the candidate creation element.

In this embodiment of the present disclosure, a specific location of the first preset region is not limited, for example, the first preset region may be located below the first associated information. The candidate element type may be a preset fixed type or a type dynamically determined based on the preset creation element. The candidate element type includes a creation element type that can be used for joint creation with the preset creation element, that is, a creation element of the candidate element type and the preset creation element may appear in same media content at the same time. For example, a type of the preset creation element is music, and the candidate element type may include at least one of an effect, a template, and a creation theme. For example, a type of the preset creation element is an effect, and the candidate element type may include at least one of music and a creation theme. For example, a type of the preset creation element is a creation theme, and the candidate element type may include at least one of music, an effect, and a template. Optionally, second associated information of at least one candidate creation element respectively corresponding to at least two candidate element types is displayed in the first preset region of the target interface. This can provide users with more joint creation ways for selection.

For example, the candidate creation element and the preset creation element meet the preset media content association relationship, and the preset media content association relationship may be determined based on factors such as attributes (such as a number of pieces) of the media content that contains both the candidate creation element and the preset creation element or a display scene.

The second associated information is associated information of the candidate creation element, and may be specifically description information of the candidate creation element. Taking an effect as an example, the second associated information of the effect may include a name of the effect, a cover of the effect, a creator of the effect, the number of users, etc.

As an optional implementation, both the second associated information and the third associated information of the at least one candidate creation element may alternatively be displayed in the first preset region. The third associated information may be a collection of media content associated with the preset creation element and the candidate creation element. The collection of media content may include at least one media content associated with the preset creation element and the candidate creation element. A specific association method is not limited, for example, the media content is created based on the preset creation element and the candidate creation element. A specific display manner of the collection of media content is not limited. For example, the associated information of the media content in the collection may be displayed, for example, a cover may be displayed or a clip may be played. A relative location relationship between the third associated information and the second associated information is not limited. For example, the third associated information is displayed below or to the right of the second associated information.

For example, if there are a plurality of candidate element types, second associated information (or the second associated information and third associated information) of candidate creation elements respectively corresponding to the candidate element types may be displayed in an aggregated manner in the first preset region. An aggregated display manner is not limited, for example, sequential displaying from top to bottom or from left to right.

Fig. 2 is a schematic diagram of an interface according to an embodiment of the present disclosure. As shown in Fig. 2, first associated information 202 of a preset creation element Xa, including an associated image and a name, is displayed in a target interface 201. Second associated information of candidate creation elements corresponding to two candidate element types is displayed in a first preset region 203 of the target interface 201. It is assumed that the two candidate element types are respectively a type A and a type B, a candidate creation element corresponding to the type A is Aa, and second associated information 204 of Aa is displayed in the first preset region 203.

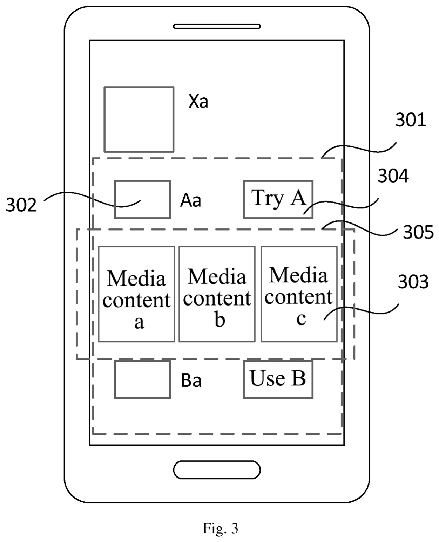

Fig. 3 is a schematic diagram of another interface according to an embodiment of the present disclosure. As shown in Fig. 3, second associated information 302 and third associated information 303 of candidate creation elements respectively corresponding to two candidate element types are displayed in a first preset region 301 of a target interface. Third associated information of Ba is not shown.

According to the interface display method provided in this embodiment of the present disclosure, the first associated information of the preset creation element is displayed in the target interface; and the second associated information of the at least one candidate creation element respectively corresponding to the at least one candidate element type or the second associated information and third associated information of the candidate creation element are displayed in the first preset region of the target interface, where the candidate creation element and the preset creation element meet the preset media content association relationship, and the second associated information includes the description information of the candidate creation element, and/or the third associated information includes the collection of media content associated with the preset creation element and the candidate creation element. With the above technical solution, associated information of the preset creation element and a candidate creation element of at least one candidate element type that has a media content association with the preset creation element may be displayed in an aggregated manner in the target interface, so that a user can easily view rich and diverse associated information of the preset creation element, which helps the user to obtain creation inspiration, improves creation efficiency and media content quality, and effectively improves user experience.

In some embodiments, the method further includes: displaying a target creation entry corresponding to the candidate creation element in the target interface, the target creation entry is used to trigger creation of media content based on candidate creation element corresponding to the target creation entry and the preset creation element. Thus, the user may conveniently select the candidate creation element and the preset creation element to create media content by triggering the target creation entry, thereby improving the flexibility and convenience of media content creation, and further improving creation efficiency and user experience.

For example, second associated information and a target creation entry of a same candidate creation element may be displayed in association in the first preset region, to help the user to clarify a correspondence between the second associated information and the target creation entry. After the second associated information of the candidate creation element is known, the joint creation of the candidate creation element and the preset creation element may be conveniently achieved by triggering the target creation entry displayed in association. As shown in Fig. 2, a target creation entry 205 corresponding to Aa is also displayed to the right of the second associated information 204 of Aa. A text prompt is displayed in the target creation entry 205, such as "Try A", to prompt the user to use the candidate creation element Aa of the type A and the preset creation element Xa to create media content together. As shown in Fig. 3, a target creation entry 304 corresponding to Aa is also displayed to the right of the second associated information 302 of Aa.

In some embodiments, after the displaying a target creation entry corresponding to the candidate creation element in the target interface, the method further includes: in response to a trigger operation for the target creation entry, entering a preset creation interface; and loading, in the preset creation interface, the preset creation element and/or the candidate creation element corresponding to the target creation entry that is triggered. Thus, the user may conveniently perform joint creation based on a plurality of creation elements.

In some embodiments, after the loading, in the preset creation interface, the preset creation element and/or the candidate creation element corresponding to the target creation entry that is triggered, the method further includes: in response to a preset creation element replacement operation input based on the preset creation interface, replacing the preset creation element that is loaded with a reselected creation element, where the reselected creation element and the preset creation element belong to a same creation element type. Thus, the user may flexibly replace the preset creation element, thereby further enhancing flexibility of media content creation. For example, the creation element type of the preset creation element is music, and the preset creation element is music a. The user may replace the music a with music b according to actual needs. Optionally, in response to the trigger operation for the loaded preset creation element, an element reselection interface is entered, and in response to a preset creation element selection operation input based on the element reselection interface, the loaded preset creation element is replaced with a reselected creation element indicated by the preset creation element selection operation.

In some embodiments, before the displaying second associated information of at least one candidate creation element respectively corresponding to at least one candidate element type, or displaying the second associated information and third associated information of the at least one candidate creation element, the method further includes: obtaining candidate element types that meet a preset display condition; and for each candidate element type of the candidate element types, obtaining the at least one candidate creation element corresponding to the candidate element type and meeting the preset media content association relationship with the preset creation element. Thus, types of candidate creation elements whose second associated information needs to be displayed may be obtained dynamically and flexibly. The candidate element type and the candidate creation element may be determined by the preset application or by a server corresponding to the preset application, and a specific determination method is not limited.

For example, the type of the preset creation element is X, and a set of creation element types that can be used together with the type X for creation is denoted as Y. The set Y may include the type A, the type B, a type C, and a type D. According to a current scenario, the candidate element type is selected from the set Y according to the preset display condition. As shown in Fig. 2, candidate element types currently selected are the type A and the type B. In other scenarios, the selected candidate element types may be the type B, the type C, or other types.

In some embodiments, each candidate element type corresponds to at least two creation elements, and the at least two creation elements include the at least one candidate creation element. For example, the candidate element type is an effect, the candidate element type may correspond to at least two effects, for example, an effect A and an effect B, and the obtained candidate creation element is at least one of the at least two effects.

Optionally, the target interface may be displayed after a jump is made from a preset display interface. The preset display interface may specifically be an interface for displaying media content. The media content being displayed in the preset display interface is denoted as target media content. If the target media content contains the preset creation element, the user may input a trigger operation for the preset creation element to jump to display the target interface. Optionally, the target interface may alternatively be displayed after a jump is made from a preset search result interface. For example, after the user searches for the preset creation element, a search result of the preset creation element is displayed in the preset search result interface. After the search result is triggered, a jump may be made to the target interface.

In some embodiments, the candidate element type that meets a preset display condition may be determined by following manner: determining a target creation element type to which a target creation element in target media content in a preset display interface belongs, and triggering, based on the target creation element type, determination of the candidate element type that meets the preset display condition, in the preset display interface, in response to a trigger operation for the preset creation element, jump to display the target interface, and the target creation element does not include the preset creation element. Thus, when viewing the target media content, the user may intuitively achieve a creation effect of performing joint creation based on a preset creation element and a creation element of a candidate element type, which helps to stimulate creation inspiration. If there is a need for joint creation, the creation need may be conveniently met in the target interface after the jump, thereby improving user experience.

For example, the type of the preset creation element is music, and the target media content includes the music a and an effect a. When the user inputs a trigger operation for the music a, a jump may be made to a music details page (target interface), and an effect type may be determined as the candidate element type. For the effect type, a corresponding effect that meets the preset media content association relationship with the music a is determined as the candidate creation element, and then second associated information (or the second associated information and third associated information) of the determined effect and a target creation entry are displayed in the target interface, so that the user can choose an appropriate effect to create media content together with the music a.

In some embodiments, the candidate element type that meets the preset display condition is also determined by following manner: determining the candidate element type based on a preset type. Thus, a creation element of a preset creation element type may be displayed in the target interface. Optionally, determining the candidate element type based on the preset type may specifically be determining, as the candidate element type, a preset type that meets a preset type condition. The preset type condition may be determined, for example, based on attributes (such as a number of pieces) of posted media content created based on a creation element of the preset type (such as whether the number of pieces of posted media content reaches a target number threshold). For example, the preset creation element is a creation element of an E type, and corresponding preset types include an F type, a G type, and an H type. The preset type condition is that in media content that uses the preset creation element, a number of pieces of posted media content that also uses a creation element of the preset type for creation reaches X. In this case, if a number of pieces of media content created based on each of the F type and the G type is greater than X, and a number of pieces of media content created based on the H type is less than X, then the F type and the G type are determined as candidate element types.

Optionally, if candidate element types that meet the preset display condition include both a creation element type to which a target creation element in target media content before jumping in the preset display interface belongs and the preset type, the creation element type to which the target creation element belongs can be preferentially displayed.

In some embodiments, the preset media content association relationship includes: there being at least one posted media content created based on the candidate creation element and the preset creation element.

In some embodiments, the preset association relationship may include: target media content in a preset display interface being created based on the candidate creation element and the preset creation element, where in the preset display interface, in response to a trigger operation for the preset creation element, jump to display the target interface. Thus, after the user intuitively views, from the preset display interface, the target media content and a corresponding creation effect obtained by performing joint creation based on the preset creation element and the candidate creation elements, the user may conveniently implement similar joint creation in the target interface to improve user experience.

In some embodiments, the preset association relationship may include: an attribute of media content that is created based on the candidate creation element and the preset creation element meeting a first preset condition within a preset time period.

Optionally, a first number of pieces of media content that is created based on the candidate creation element and the preset creation element is greater than a first preset number threshold within a first preset time period. Thus, popular candidate creation elements can be recommended to the user for joint creation, which helps to improve quality and popularity of the created media content.

For example, the first preset time period may be recent preset time duration, for example, the last 7 days. The media content created based on the candidate creation element and the preset creation element may specifically be all media content created based on the candidate creation element and the preset creation element and posted in a preset application or media content that meets a preset filtering condition. The first preset number threshold may be set according to actual needs, for example, 100. The preset filtering condition is not specifically limited.

Optionally, a second number of pieces of media content created based on the candidate creation element and the preset creation element is ranked higher than a preset ranking within a second preset time period. Thus, a specific number of popular candidate creation elements may be recommended to the user for joint creation.

For example, the second preset time period may be the same as or different from the first preset time period. For example, the second preset time period may be a recent preset time period, for example, the last 7 days or 10 days. The media content created based on the candidate creation element and the preset creation element may specifically be all media content created based on the candidate creation element and the preset creation element and posted in a preset application or media content that meets a preset filtering condition. For all creation elements of the current candidate element type or each creation element in designated creation elements, second numbers of pieces of media content created based on the current creation element and the preset creation element are determined, the second numbers are ranked in reverse order, and creation elements corresponding to a second number that is ranked higher than the preset ranking are selected as candidate creation elements to be displayed. The preset ranking may be set according to actual needs, for example, 1 or 3.

In some embodiments, after the displaying second associated information of at least one candidate creation element respectively corresponding to at least one candidate element type in a first preset region of the target interface, the method further includes: in response to a preset replacement operation for a target candidate element type, replacing the at least one candidate creation element of the target candidate element type to which the second associated information that is displayed belongs. Thus, more candidate creation elements may be provided to the user for selection.

For example, the target candidate element type may be understood as a candidate element type for which the user currently performs a targeted operation. The preset replacement operation may be, for example, triggering for a preset replacement control. The preset replacement control may be displayed at an associated location of currently displayed second associated information of at least one candidate creation element of the target candidate element type, such as a virtual button with text such as "Switch to another batch" or "Switch to another one". The preset replacement operation may alternatively be a gesture operation for the target candidate element type, for example, the preset replacement operation may be a swipe operation for inputting currently displayed second associated information of at least one candidate creation element of the target candidate element type, for example, swiping to the left.

Optionally, if a same candidate element type corresponds to a plurality of candidate creation elements that need to be displayed at the same time, second associated information of the plurality of candidate creation elements corresponding to the same candidate element type may be displayed in an aggregated manner. Taking Fig. 2 as an example, if the type A corresponds to the candidate creation element Aa and a candidate creation element Ab, second associated information of Ab may be displayed between the second associated information 204 of Aa and second associated information of Bb.

For example, replacing at least one candidate creation element of the target candidate element type to which the displayed second associated information belongs may specifically be replacing at least one of the at least one candidate creation element of the target candidate element type currently displayed. For example, currently displaying second associated information of a candidate creation element of the target candidate element type may be switched to displaying second associated information of another candidate creation element of the target candidate element type. For another example, second associated information of N candidate creation elements of the target candidate element type is currently displayed, and all or some of the N candidate creation elements may be replaced with new candidate creation elements of the target candidate element type.

In some embodiments, the displaying third associated information of the at least one candidate creation element includes: displaying fourth associated information of at least one example media content of a corresponding candidate creation element in an associated region of the target creation entry, where the example media content is created based on the corresponding candidate creation element and the preset creation element. Thus, the user can intuitively achieve a creation effect of performing joint creation based on a preset creation element and a creation element of a candidate element type, which helps to stimulate creation inspiration. If there are a plurality of pieces of example media content, the user can view more creation effects, which further helps to stimulate creation inspiration.

For example, a specific location of the associated region is not limited, for example, the associated region may be below the target creation entry. The fourth associated information of the example media content may, for example, include a media content cover, a screenshot, an animated image, a video clip, or the media content itself of the example media content, where the animated image, the video clip, and the media content itself may be played automatically when displayed or played when triggered by the user, and so on. As shown in Fig. 3, an associated region 305 is located below a target creation entry, and fourth associated information of three pieces of example media content of the candidate creation element Aa is displayed in the associated region 305.

Optionally, after the displaying fourth associated information of at least one example media content of a corresponding candidate creation element in an associated region of the target creation entry, the method may further include: in response to a preset trigger operation for the target fourth associated information, displaying example media content to which the target fourth associated information belongs. This makes it convenient for the user to view detailed content of the example media content. Optionally, the example media content to which the target fourth associated information belongs may be displayed in a preset media content details interface.

In some embodiments, after the displaying fourth associated information of at least one example media content of a corresponding candidate creation element in an associated region of the target creation entry, the method includes: displaying a preset sub-interface in response to a preset trigger operation for the associated region; and displaying fourth associated information of a plurality of example media content of the corresponding candidate creation element in the preset sub-interface, the plurality of example media contents include the at least one example media content. This allows the user to obtain purer viewing experience of the example media content in the preset sub-interface. Optionally, the number of the plurality of example media contents is greater than the number of the at least one example media content. This allows the user to view more example media content and corresponding creation effects.

In some embodiments, after the displaying fourth associated information of at least one example media content of a corresponding candidate creation element in an associated region of the target creation entry, the method further includes: in response to a preset gesture operation for the associated region, replacing the at least one example media content to which the displayed fourth associated information belongs. Thus, more example media content is provided to the user for viewing. The preset gesture operation may be, for example, a swipe operation, for example, swiping to the left.

In some embodiments, the method further includes: in response to the preset gesture operation for the associated region, in response to determining that display of the at least one example media content meets a second preset condition, displaying a preset sub-interface entry in the associated region, where the displaying a preset sub-interface in response to a preset trigger operation for the associated region includes: displaying the preset sub-interface in response to a trigger operation for the preset sub-interface entry. Thus, the display of the preset sub-interface may be triggered when the display of the at least one example media content meets the second preset condition, to reduce erroneous operations. The second preset condition may be, for example, that the last example media content that can be displayed in the associated region is displayed.

In some embodiments, the method further includes: displaying a creation entry corresponding to the preset creation element in a second preset region of the target interface, where the creation entry is used to trigger creation of media content based on the preset creation element. Thus, different types of creation entries are provided in the target interface, and the user can freely choose to use preset creation elements for creation, or use preset creation elements and candidate creation elements for joint creation, which further enhances flexibility and convenience of creation and improves user experience.

For example, the second preset region may be associated with the display location of the first associated information, for example, the second preset region is displayed below or to the right of the first associated information. The second preset region may alternatively be a fixed region in the target interface, for example, a bottom region of the target interface. Optionally, the second preset region may intersect with the first preset region. For example, the creation entry may be displayed in the form of a floating control to facilitate user triggering.

In some embodiments, in a third preset region of the target interface, fifth associated information of at least one basic example media content of the preset creation element is displayed, where the basic example media content is created based on the preset creation element.

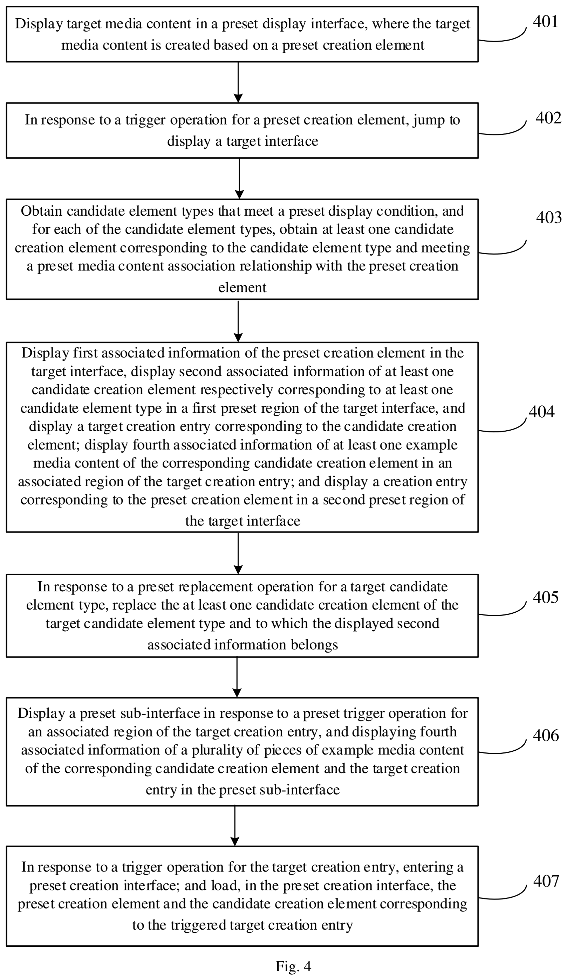

Fig. 4 is a schematic flowchart of another interface display method according to an embodiment of the present disclosure. This embodiment of the present disclosure is optimized based on optional solutions in the above embodiment. Specifically, the method includes the following steps.

Step 401: Display target media content in a preset display interface, where the target media content is created based on a preset creation element.

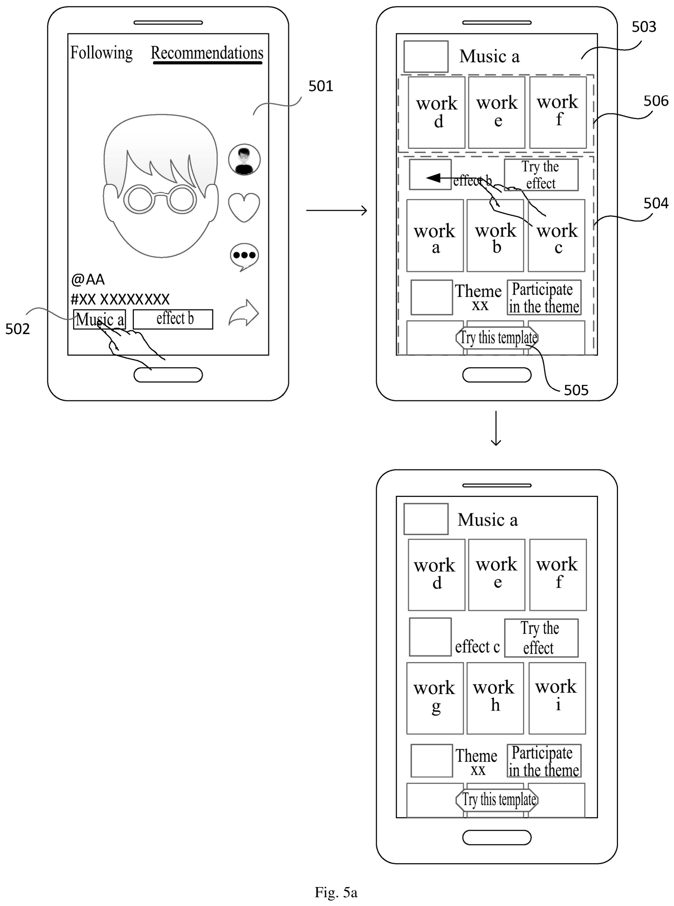

For example, a type of the preset creation element is music. Fig. 5a is a schematic diagram of interface interaction according to an embodiment of the present disclosure. As shown in Fig. 5a, target media content is being displayed in a preset display interface 501, and the target media content is created based on music a and an effect b.

Step 402: In response to a trigger operation for a preset creation element, jump to display a target interface.

For example, as shown in Fig. 5a, when a user clicks the "Music a" button 502, it may be considered that a trigger operation for a preset creation element is input, and a jump can be made to a target interface 503. The target interface 503 may be considered as a music details page.

Step 403: Obtain candidate element types that meet a preset display condition, and for each of the candidate element types, obtain at least one candidate creation element corresponding to the candidate element type and meeting a preset media content association relationship with the preset creation element.

For example, the preset display condition includes determining, as the candidate element type that meets the preset display condition, a creation element type to which a target creation element in target media content before jumping in the preset display interface belongs; and the preset display condition may further include determining a preset type as the candidate element type.

As shown in Fig. 5a, the target creation element in the target media content includes an effect b, which belongs to an effect type. The preset type includes a creation theme type. Candidate element type may be comprehensively determined as the special effect type and the creation theme type. For the effect type, effect creation elements used together with the music a for joint creation of a first number of pieces of media content that is greater than a first preset number threshold (such as 100) in the last 7 days may be determined as candidate creation elements. It is assumed that after filtering, determined effects include the effect b, an effect c, and an effect d. For the creation theme type, a theme xx used together with the music a for joint creation of a second number of pieces of media content that is ranked higher than a preset ranking (such as the 2nd) in the last 10 days may be determined as a candidate creation element.

Step 404: Display first associated information of the preset creation element in the target interface, display second associated information of at least one candidate creation element respectively corresponding to at least one candidate element type in a first preset region of the target interface, and display a target creation entry corresponding to the candidate creation element; display fourth associated information of at least one example media content of the corresponding candidate creation element in an associated region of the target creation entry; and display a creation entry corresponding to the preset creation element in a second preset region of the target interface.

For example, as shown in Fig. 5a, the first associated information such as an album cover and a name of the music a is displayed in the target interface 503, and second associated information (such as an effect icon and a name) of the effect b and second associated information (such as a theme icon and a name) of the theme xx are separately displayed in a first preset region 504. A corresponding target creation entry "Try the effect" is displayed at an associated location of the second associated information of the effect b, and a corresponding target creation entry "Participate in the theme" is displayed at an associated location of the second associated information of the theme xx.

Optionally, if a plurality of effects are allowed to be displayed for the effect type, and the effect b also meets the preset media content association relationship with the music a, the effect b may be set at the first display location, as shown in Fig. 5a.

As shown in Fig. 5a, taking the effect b as an example, fourth associated information (such as a media content cover) of a plurality of pieces of example media content of the corresponding effect b, such as works a, b, and c in Fig. 5a, is displayed in a region below the target creation entry "Try the effect". For the theme xx, Fig. 5a shows part of fourth associated information of a plurality of pieces of corresponding example media content. If the user wants to view the entire fourth associated information, the user can view fourth associated information by inputting a gesture operation such as a swipe-up operation.

As shown in Fig. 5a, in the second preset region of the target interface, a creation entry "Try this template" 505 corresponding to the music a is displayed. If the user triggers the creation entry, the music a may be used for creation.

Optionally, as shown in Fig. 5a, in a third preset region 506 of the target interface, fifth associated information (such as a media content cover) of a plurality of pieces of basic example media content of the music a, such as works d, e, and f in Fig. 5a, is displayed, where the basic example media content is created based on the music a.

Step 405: In response to a preset replacement operation for a target candidate element type, replace the at least one candidate creation element of the target candidate element type and to which the displayed second associated information belongs.

For example, as shown in Fig. 5a, if the user does not want to use the effect b, but wants to use another effect, the user may input a preset replacement operation for the effect type by performing a swipe-left operation on the effect b to achieve effect replacement, such as replacing it with the effect c. Accordingly, the region below the target creation entry "Try the effect" is switched to display fourth associated information (such as a media content cover) of a plurality of pieces of example media content showing the effect c, such as works g, h, and i in Fig. 5a.

Step 406: Display a preset sub-interface in response to a preset trigger operation for an associated region of the target creation entry, and displaying fourth associated information of a plurality of pieces of example media content of the corresponding candidate creation element and the target creation entry in the preset sub-interface.

The plurality of pieces of example media content include the at least one example media content.

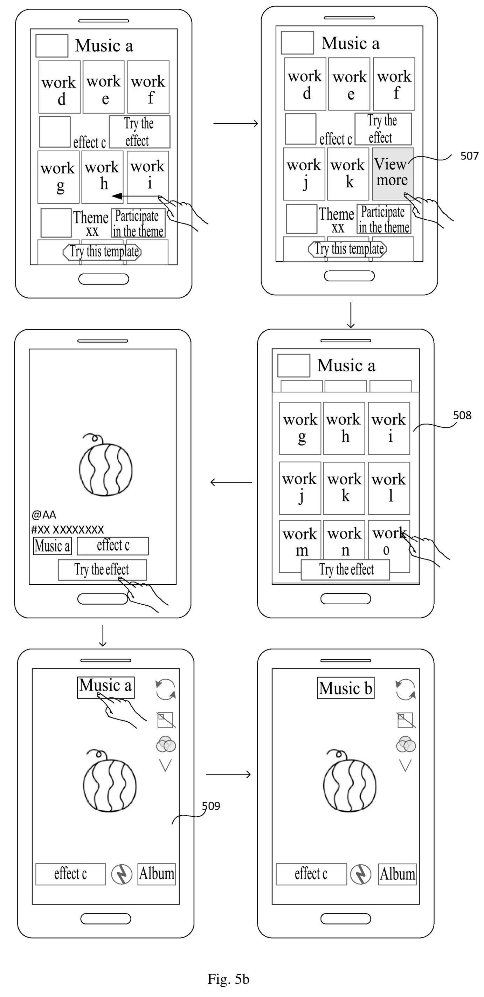

Fig. 5b is a schematic diagram of another interface interaction according to an embodiment of the present disclosure. For example, as shown in Fig. 5b, it is assumed that for each candidate creation element, fourth associated information of three pieces of example media content may be displayed at the same time, if the user wants to view the fourth or subsequent example media content, the user can view a first preset number of (such as 5) pieces of example media content by inputting a swipe-left operation, etc. As shown in Fig. 5b, after the user inputs the swipe-left operation, works j and k are displayed. If the first preset number still does not meet viewing needs of the user, a preset sub-interface entry may be displayed in the last display location, such as "View more" 507. When the user clicks "View more" 507, a preset sub-interface 508 may be displayed, and more example media content and corresponding target creation entries may be displayed.

Step 407: In response to a trigger operation for the target creation entry, entering a preset creation interface; and load, in the preset creation interface, the preset creation element and the candidate creation element corresponding to the triggered target creation entry.

Optionally, when viewing the fourth associated information of the example media content, the user may trigger the fourth associated information to jump to a media content details page to view example media content details. The media content details page may also include a corresponding target creation entry to facilitate user triggering.

As shown in Fig. 5b, if the user determines to use a candidate creation element, a corresponding target creation entry may be triggered, to jump to a preset creation interface 509. The preset creation interface 509 is loaded with the music a and the effect c, and creation may be performed by shooting or selecting materials. Optionally, if the user clicks the music a, music may be reselected, such as replacing the music a with selected music b.

According to the interface display method provided in this embodiment of the present disclosure, after the preset creation element in the media content display interface is triggered, a jump may be made to the target interface corresponding to the preset creation element, the candidate creation element that meets the preset association relationship with the preset creation element and that belongs to the candidate element type that meets the preset display condition is displayed in the target interface, and the target creation entry, the creation entry of the preset creation element, and the corresponding example media content are displayed, so that the user can intuitively view the creation effect of the example media content and flexibly choose the creation method according to his own will, thereby improving flexibility and convenience of media content creation, improving creation efficiency, and effectively improving user experience.

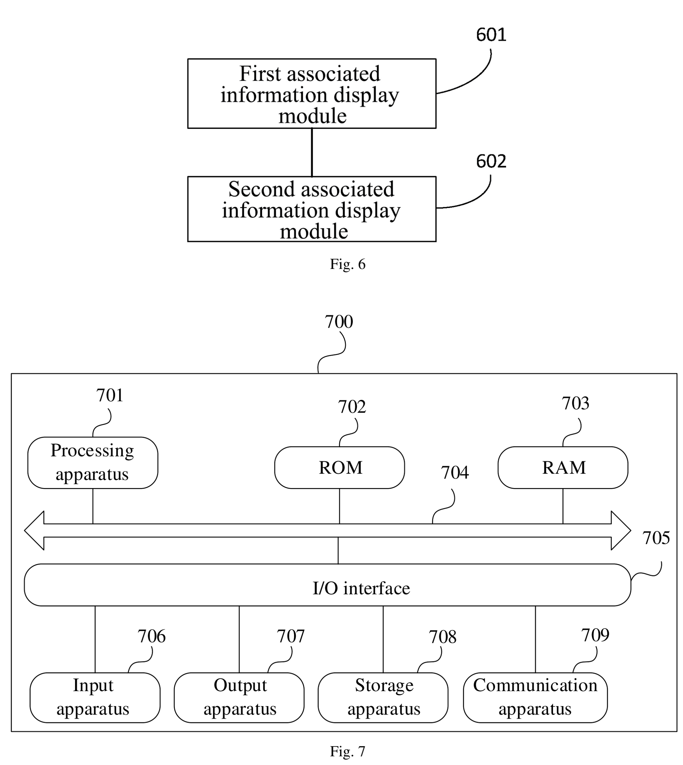

Fig. 6 is a schematic diagram of a structure of an interface display apparatus according to an embodiment of the present disclosure. As shown in Fig. 6, the apparatus includes:
a first associated information display module 601, configured to display first associated information of a preset creation element in a target interface; and
a second associated information display module 602, configured to display second associated information of at least one candidate creation element respectively corresponding to at least one candidate element type in a first preset region of the target interface, or display the second associated information and third associated information of the at least one candidate creation element in the first preset region of the target interface, where the candidate creation element and the preset creation element meet a preset media content association relationship, and the second associated information includes description information of the candidate creation element, and/or the third associated information includes a collection of media content associated with the preset creation element and the candidate creation element.

In the technical solutions provided in this embodiment of the present disclosure, associated information of the preset creation element and a candidate creation element of at least one candidate element type that has a media content association with the preset creation element may be displayed in an aggregated manner in the target interface, so that a user can easily view rich and diverse associated information of the preset creation element, which helps the user to obtain creation inspiration, improves creation efficiency and media content quality, and effectively improves user experience.

Optionally, the apparatus further includes: a target creation entry display module, configured to display a target creation entry corresponding to the candidate creation element in the target interface, where the target creation entry is used to trigger creation of media content based on a candidate creation element corresponding to the target creation entry and the preset creation element.

Optionally, the apparatus further includes:
a creation interface entry module, configured to after the target creation entry corresponding to the candidate creation element is displayed in the target interface, in response to a trigger operation for the target creation entry, enter a preset creation interface; and
an element loading module, configured to load, in the preset creation interface, the preset creation element and/or the candidate creation element corresponding to the target creation entry that is triggered.

Optionally, the apparatus further includes: a first element replacement module, configured to after the preset creation element and/or the candidate creation element corresponding to the triggered target creation entry is loaded in the preset creation interface, replace the preset creation element that is loaded with a reselected creation element in response to a preset creation element replacement operation input based on the preset creation interface, where the reselected creation element and the preset creation element belong to a same creation element type.

Optionally, the apparatus further includes:
a type obtaining module, configured to before the displaying second associated information of at least one candidate creation element respectively corresponding to at least one candidate element type, or displaying the second associated information and third associated information of the at least one candidate creation element, obtain one or more candidate element types that meet a preset display condition; and an element obtaining module configured to, for each candidate element type of the one or more candidate element types, obtaining the at least one candidate creation element corresponding to the candidate element type and meeting the preset media content association relationship with the preset creation element.

Optionally, each candidate element type corresponds to at least two creation elements, and the at least two creation elements comprise the at least one candidate creation element.

Optionally, the candidate element type that meets a preset display condition is determined by following manner:
determining a target creation element type to which a target creation element in target media content in a preset display interface belongs, and determining the candidate element type that meets the preset display condition based on the target creation element type, where in the preset display interface, in response to a trigger operation for the preset creation element, jump to display the target interface, and the target creation element is different from the preset creation element; and/or
determining the candidate element type based on a preset type.

Optionally, the preset media content association relationship represents there being at least one posted media content created based on the candidate creation element and the preset creation element.

Optionally, the preset association relationship represents at least one of the following manners:
target media content in a preset display interface being created based on the candidate creation element and the preset creation element, where in the preset display interface, in response to a trigger operation for the preset creation element, a jump is made to display the target interface; and
an attribute of media content that is created based on the candidate creation element and the preset creation element meeting a first preset condition within a preset time period.

Optionally, the apparatus further includes: a second element replacement module configured to, after the displaying second associated information of at least one candidate creation element respectively corresponding to at least one candidate element type in a first preset region of the target interface, replace the at least one candidate creation element of a target candidate element type to which the second associated information that is displayed belongs in response to a preset replacement operation for the target candidate element type.

Optionally, when displaying the third associated information of the at least one candidate creation element, the second associated information display module is specifically configured to: display fourth associated information of at least one example media content of a corresponding candidate creation element in an associated region of the target creation entry, where the example media content is created based on the corresponding candidate creation element and the preset creation element.

Optionally, the apparatus further includes:
a sub-interface display module configured to, after the displaying fourth associated information of at least one example media content of a corresponding candidate creation element in an associated region of the target creation entry, display a preset sub-interface in response to a preset trigger operation for the associated region; and
a sub-interface associated information display module, configured to fourth associated information of a plurality of example media contents of the corresponding candidate creation element in the preset sub-interface, where the plurality of example media contents comprise the at least one example media content.

Optionally, the apparatus further includes: a media content replacement module, configured to after the displaying fourth associated information of at least one example media content of a corresponding candidate creation element in an associated region of the target creation entry, further including: replacing the at least one example media content to which the fourth associated information that is displayed belongs in response to a preset gesture operation for the associated region.

Optionally, the apparatus further includes: an entry display module, configured to in response to the preset gesture operation for the associated region, in response to determining that display of the at least one example media content meets a second preset condition, displaying a preset sub-interface entry in the associated region,
the sub-interface display module is specifically configured to: display the preset sub-interface in response to a trigger operation for the preset sub-interface entry

Optionally, the apparatus further includes: a creation entry display module, configured to display a creation entry corresponding to the preset creation element in a second preset region of the target interface, where the creation entry is used to trigger creation of media content based on the preset creation element.

Optionally, a type of the preset creation element includes music, and the candidate element type includes at least one of an effect, a template, and a creation theme.

The interface display apparatus provided in this embodiment of the present disclosure can perform the interface display method provided in any one of the embodiments of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

Fig. 7 is a schematic diagram of a structure of an electronic device according to an embodiment of the present disclosure. Reference is made to Fig. 7 below, which is a schematic diagram of a structure of an electronic device (such as a terminal device or a server in Fig. 7) 700 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in Fig. 7 is merely an example, and shall not impose any limitation on the function and scope of use of the embodiments of the present disclosure.

As shown in Fig. 7, the electronic device 700 may include a processing apparatus (e.g., a central processing unit or a graphics processing unit) 701 that may perform a variety of appropriate actions and processing in accordance with a program stored in a read-only memory (ROM) 702 or a program loaded from a storage apparatus 708 into a random-access memory (RAM) 703. The RAM 703 further stores various programs and data required for the operation of the electronic device 700. The processing apparatus 701, the ROM 702, and the RAM 703 are connected to one another through a bus 704. An input/output (I/O) interface 705 is also connected to the bus 704.

Generally, the following apparatuses may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a tape and a hard disk; and a communication apparatus 709. The communication apparatus 709 may allow the electronic device 700 to perform wireless or wired communication with other devices to exchange data. Although Fig. 7 shows the electronic device 700 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 709, installed from the storage apparatus 708, or installed from the ROM 702. When the computer program is executed by the processing apparatus 701, the above-mentioned functions defined in the method of the embodiment of the present disclosure are performed.

The names of messages or information exchanged between a plurality of apparatuses in the implementations of the present disclosure are used for illustrative purposes only, and are not used to limit the scope of these messages or information.

The electronic device provided in this embodiment of the present disclosure and the interface display method provided in the above embodiments belong to the same inventive concept. For the technical details not exhaustively described in this embodiment, reference may be made to the above embodiments, and this embodiment and the above embodiments have the same beneficial effects.

An embodiment of the present disclosure provides a computer storage medium storing a computer program thereon, where the program, when executed by a processor, causes the interface display method provided in the above embodiments to be implemented.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: display first associated information of a preset creation element in a target interface; and display second associated information of at least one candidate creation element respectively corresponding to at least one candidate element type in a first preset region of the target interface, or display the second associated information and third associated information of the at least one candidate creation element in the first preset region of the target interface, where the candidate creation element and the preset creation element meet a preset media content association relationship, and the second associated information includes description information of the candidate creation element, and/or the third associated information includes a collection of media content associated with the preset creation element and the candidate creation element.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the modules do not constitute a limitation on the modules in some cases. For example, the first associated information display module may alternatively be described as "a module for displaying first associated information of a preset creation element in a target interface".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, an interface display method is provided, the method including:
displaying first associated information of a preset creation element in a target interface; and
displaying second associated information of at least one candidate creation element respectively corresponding to at least one candidate element type in a first preset region of the target interface, or displaying the second associated information and third associated information of the at least one candidate creation element in the first preset region of the target interface, where the candidate creation element and the preset creation element meet a preset media content association relationship, and the second associated information includes description information of the candidate creation element, and/or the third associated information includes a collection of media content associated with the preset creation element and the candidate creation element.

According to one or more embodiments of the present disclosure, the method further includes:
displaying a target creation entry corresponding to the candidate creation element in the target interface, where the target creation entry is used to trigger creation of media content based on a candidate creation element corresponding to the target creation entry and the preset creation element.

According to one or more embodiments of the present disclosure, after the displaying a target creation entry corresponding to the candidate creation element in the target interface, the method further includes:
entering a preset creation interface in response to a trigger operation for the target creation entry,
loading, in the preset creation interface, the preset creation element and/or the candidate creation element corresponding to the target creation entry that is triggered.

According to one or more embodiments of the present disclosure, after the loading, in the preset creation interface, the preset creation element and/or the candidate creation element corresponding to the target creation entry that is triggered the method further includes:
replacing the preset creation element that is loaded with a reselected creation element in response to a preset creation element replacement operation input based on the preset creation interface, where the reselected creation element and the preset creation element belong to a same creation element type.

According to one or more embodiments of the present disclosure, before the displaying second associated information of at least one candidate creation element respectively corresponding to at least one candidate element type, or displaying the second associated information and third associated information of the at least one candidate creation element, the method further includes:
obtaining candidate element types that meet a preset display condition; and
for each candidate element type of the candidate element types, obtaining the at least one candidate creation element corresponding to the candidate element type and meeting the preset media content association relationship with the preset creation element.

According to one or more embodiments of the present disclosure, each candidate element type corresponds to at least two creation elements, and the at least two creation elements comprise the at least one candidate creation element.

According to one or more embodiments of the present disclosure, a candidate element type that meets a preset display condition is determined by following manner:
determining a target creation element type to which a target creation element in target media content in a preset display interface belongs, and triggering, based on the target creation element type, determination of the candidate element type that meets the preset display condition, where in the preset display interface, in response to a trigger operation for the preset creation element, jump to display the target interface, and the target creation element is different from the preset creation element; and/or
determining the candidate element type based on a preset type.

According to one or more embodiments of the present disclosure, the preset media content association relationship comprises: there being at least one posted media content created based on the candidate creation element and the preset creation element.

According to one or more embodiments of the present disclosure, the preset association relationship includes at least one of the following:
target media content in a preset display interface being created based on the candidate creation element and the preset creation element, where in the preset display interface, jump to display the target interface in response to a trigger operation for the preset creation element; and
an attribute of media content that is created based on the candidate creation element and the preset creation element meeting a first preset condition within a preset time period.

According to one or more embodiments of the present disclosure, after the displaying second associated information of at least one candidate creation element respectively corresponding to at least one candidate element type in a first preset region of the target interface, the method further includes:
replacing the at least one candidate creation element of a target candidate element type to which the second associated information that is displayed belongs in response to a preset replacement operation for the target candidate element type.

According to one or more embodiments of the present disclosure, the displaying third associated information of the at least one candidate creation element comprises: displaying fourth associated information of at least one example media content of a corresponding candidate creation element in an associated region of the target creation entry, where the example media content is created based on the corresponding candidate creation element and the preset creation element.

According to one or more embodiments of the present disclosure, after the displaying fourth associated information of at least one example media content of a corresponding candidate creation element in an associated region of the target creation entry, the method further includes:
displaying a preset sub-interface in response to a preset trigger operation for the associated region; and
displaying fourth associated information of a plurality of example media contents of the corresponding candidate creation element in the preset sub-interface, where the plurality of example media contents comprise the at least one example media content.

According to one or more embodiments of the present disclosure, after the displaying fourth associated information of at least one example media content of a corresponding candidate creation element in an associated region of the target creation entry, the method further includes:
replacing the at least one example media content to which the fourth associated information that is displayed belongs in response to a preset gesture operation for the associated region.

According to one or more embodiments of the present disclosure, the method further includes:
in response to the preset gesture operation for the associated region, in response to determining that display of the at least one example media content meets a second preset condition, displaying a preset sub-interface entry in the associated region,
the displaying a preset sub-interface in response to a preset trigger operation for the associated region includes:
   displaying the preset sub-interface in response to a trigger operation for the preset sub-interface entry.

According to one or more embodiments of the present disclosure, the method further includes: displaying a creation entry corresponding to the preset creation element in a second preset region of the target interface, where the creation entry is used to trigger creation of media content based on the preset creation element.

According to one or more embodiments of the present disclosure, a type of the preset creation element includes music, and the candidate element type includes at least one of an effect, a template, and a creation theme.

According to one or more embodiments of the present disclosure, an interface display apparatus is provided, the apparatus including:
a first associated information display module, configured to display first associated information of a preset creation element in a target interface; and
a second associated information display module, configured to display second associated information of at least one candidate creation element respectively corresponding to at least one candidate element type in a first preset region of the target interface, or display the second associated information and third associated information of the at least one candidate creation element in the first preset region of the target interface, where the candidate creation element and the preset creation element meet a preset media content association relationship, and the second associated information includes description information of the candidate creation element, and/or the third associated information includes a collection of media content associated with the preset creation element and the candidate creation element.

According to one or more embodiments of the present disclosure, an electronic device is provided, the electronic device including:
one or more processors; and
a storage apparatus configured to store one or more programs, where
the one or more programs, when executed by the one or more processors, cause the one or more processors to implement the interface display method provided in the embodiments of the present disclosure.

According to one or more embodiments of the present disclosure, a storage medium including computer-executable instructions is provided, where the computer-executable instructions, when executed by a computer processor, are used to perform the interface display method provided in the embodiments of the present disclosure.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interface display method, comprising:
displaying first associated information of a preset creation element in a target interface; and
displaying second associated information of at least one candidate creation element respectively corresponding to at least one candidate element type in a first preset region of the target interface, or displaying the second associated information and third associated information of the at least one candidate creation element in the first preset region of the target interface, wherein the candidate creation element and the preset creation element meet a preset media content association relationship, and the second associated information comprises description information of the candidate creation element, and/or the third associated information comprises a collection of media content associated with the preset creation element and the candidate creation element.

2. The method according to claim 1, further comprising:
displaying a target creation entry corresponding to the candidate creation element in the target interface, wherein the target creation entry is used to trigger creation of media content based on a candidate creation element corresponding to the target creation entry and the preset creation element.

3. The method according to claim 2, wherein after the displaying a target creation entry corresponding to the candidate creation element in the target interface, the method further comprises:
entering a preset creation interface in response to a trigger operation for the target creation entry; and
loading, in the preset creation interface, the preset creation element and/or the candidate creation element corresponding to the target creation entry that is triggered.

4. The method according to claim 3, wherein after the loading, in the preset creation interface, the preset creation element and/or the candidate creation element corresponding to the target creation entry that is triggered, the method further comprises:
replacing the preset creation element that is loaded with a reselected creation element in response to a preset creation element replacement operation input based on the preset creation interface, wherein the reselected creation element and the preset creation element belong to a same creation element type.

5. The method according to claim 1, wherein before the displaying second associated information of at least one candidate creation element respectively corresponding to at least one candidate element type, or displaying the second associated information and third associated information of the at least one candidate creation element, the method further comprises:
obtaining candidate element types that meet a preset display condition; and
for each candidate element type of the candidate element types, obtaining the at least one candidate creation element corresponding to the candidate element type and meeting the preset media content association relationship with the preset creation element.

6. The method according to claim 1, wherein each candidate element type corresponds to at least two creation elements, and the at least two creation elements comprise the at least one candidate creation element.

7. The method according to claim 1, wherein a candidate element type that meets a preset display condition is determined by following manner:
determining a target creation element type to which a target creation element in target media content in a preset display interface belongs, and triggering, based on the target creation element type, determination of the candidate element type that meets the preset display condition, wherein in the preset display interface, in response to a trigger operation for the preset creation element, jump to display the target interface, and the target creation element is different from the preset creation element; and/or
determining the candidate element type based on a preset type.

8. The method according to claim 1, wherein the preset media content association relationship comprises: there being at least one posted media content created based on the candidate creation element and the preset creation element.

9. The method according to claim 1, wherein the preset association relationship comprises at least one of the following:
target media content in a preset display interface being created based on the candidate creation element and the preset creation element, wherein in the preset display interface, jump to display the target interface in response to a trigger operation for the preset creation element; and
an attribute of media content that is created based on the candidate creation element and the preset creation element meeting a first preset condition within a preset time period.

10. The method according to claim 1, wherein after the displaying second associated information of at least one candidate creation element respectively corresponding to at least one candidate element type in a first preset region of the target interface, the method further comprises:
replacing the at least one candidate creation element of a target candidate element type to which the second associated information that is displayed belongs in response to a preset replacement operation for the target candidate element type.

11. The method according to claim 2, wherein the displaying third associated information of the at least one candidate creation element comprises: displaying fourth associated information of at least one example media content of a corresponding candidate creation element in an associated region of the target creation entry, wherein the example media content is created based on the corresponding candidate creation element and the preset creation element.

12. The method according to claim 11, wherein after the displaying fourth associated information of at least one example media content of a corresponding candidate creation element in an associated region of the target creation entry, the method further comprises:
displaying a preset sub-interface in response to a preset trigger operation for the associated region; and
displaying fourth associated information of a plurality of example media contents of the corresponding candidate creation element in the preset sub-interface, wherein the plurality of example media contents comprise the at least one example media content.

13. The method according to claim 12, wherein after the displaying fourth associated information of at least one example media content of a corresponding candidate creation element in an associated region of the target creation entry, the method further comprises:
replacing the at least one example media content to which the fourth associated information that is displayed belongs in response to a preset gesture operation for the associated region.

14. The method according to claim 13, further comprising:
in response to the preset gesture operation for the associated region, in response to determining that display of the at least one example media content meets a second preset condition, displaying a preset sub-interface entry in the associated region,
wherein the displaying a preset sub-interface in response to a preset trigger operation for the associated region comprises:
displaying the preset sub-interface in response to a trigger operation for the preset sub-interface entry.

15. The method according to claim 1, further comprising:
displaying a creation entry corresponding to the preset creation element in a second preset region of the target interface, wherein the creation entry is used to trigger creation of media content based on the preset creation element.

16. The method according to any one of claims 1 to 15, wherein a type of the preset creation element comprises music, and the candidate element type comprises at least one of an effect, a template, and a creation theme.

17. An interface display apparatus, comprising:
a first associated information display module, configured to display first associated information of a preset creation element in a target interface; and
a second associated information display module, configured to display second associated information of at least one candidate creation element respectively corresponding to at least one candidate element type in a first preset region of the target interface, or display the second associated information and third associated information of the at least one candidate creation element in the first preset region of the target interface, wherein the candidate creation element and the preset creation element meet a preset media content association relationship, and the second associated information comprises description information of the candidate creation element, and/or the third associated information comprises a collection of media content associated with the preset creation element and the candidate creation element.

18. The apparatus according to claim 17, comprising: a module configured to perform the method according to any one of claims 2 to 16.

19. An electronic device, comprising:
one or more processors; and
a storage apparatus, configured to store one or more programs,
wherein the one or more programs, when executed by the one or more processors, cause the one or more processors to implement the interface display method according to any one of claims 1 to 16.

20. A storage medium comprising computer-executable instructions, wherein the computer-executable instructions, when executed by a computer processor, are used to perform the interface display method according to any one of claims 1 to 16.
